# EUROPÄISCHE PATENTSCHRIFT

(11) **EP 2 052 593 B1**
(45) Veröffentlichungstag und Bekanntmachung des Hinweises auf die Patenterteilung: **05.05.2010**
(21) Anmeldenummer: 08018463.3
(22) Anmeldetag: 22.10.2008
(51) Int. Cl.: A01B 13/02, A01C 5/06, A01B 49/06

(54) **Verfahren und Gerät zur Herstellung von Saatdämmen**
Method and device for making raised planting beds
Procédé et appareil pour la formation de rangs de culture élevés

(30) Priorität: 27.10.2007 DE 202007015000 U
(43) Veröffentlichungstag der Anmeldung: 29.04.2009
(73) Patentinhaber: Amazonen-Werke H. Dreyer GmbH & Co. KG, 49205 Hasbergen (DE)
(72) Erfinder: Strothmann, Eckhardt, 33790 Halle-Sandforth (DE)

(56) Entgegenhaltungen:
- FR-A- 2 839 608
- GB-A- 2 146 211
- US-A- 5 660 126
- US-B1- 6 330 922

## Beschreibung

Die Erfindung betrifft ein Verfahren und ein Gerät zur Herstellung von Saatdämmen gemäß der Patentansprüche 1 und 4.

Die Aussaat von Getreide, vorzugsweise von Mais, wird häufig mittels mehrerer verschiedener Arbeitsgeräte in mehreren Arbeitsgängen erledigt, wobei häufig auch mehrere Geräte miteinander kombiniert werden, um mehrere Arbeitsgänge zusammenzulegen. Die Ablage von Saatgut auf Dämmen ist bisher im Wesentlichen nur im Kartoffelanbau üblich.

Bei den bekannten Geräten (siehe z.B. US 6330922 und US 5 660 126) bereitet nicht eingearbeitete organische Substanz Schwierigkeiten durch Verstopfen der Säschare beim Säen und auch der Einsatz von Herbiziden wird eingeschränkt (Wirkungshemmung). Die bekannten Geräte berücksichtigen keine Tiefenlockerung direkt vor der Saatgutablage und auch die Rückverfestigung ist noch mit Mängeln behaftet. Hier sind noch mehrere Arbeitsschritte, wie z.B. Pflügen, Glätten, Walzen, Eggen etc. notwendig. Aus Sicht des Pflanzenbaus bzw. Pflanzenwachstum sind deutliche Verbesserungen wünschenswert.

Die derzeitigen Geräte zur Dammformung mischen in der Regel die nicht eingearbeitete und organische Substanz in den ganzen Damm ein, was eine Verunkrautung und ein gestörtes Pflanzenwachstum zur Folge haben kann.

Die nicht dem Boden angepasste Rückverfestigung des Dammes kann ein Austrocknen und damit einen Feuchtigkeitsverlust hervorrufen. Ebenfalls ist für die Entwicklung von gesunden Pflanzenwurzeln ein optimaler Durchwurzelungshorizont wichtig, der oftmals bei widrigen Witterungsverhältnissen durch mehrere Überfahrten geschädigt wird. Auch werden im Winter durch Frost entstandene wertvolle Kapillare durch die bekannten Verfahren geschädigt und nicht in ihrer Struktur erhalten und verstärkt. Zu dem benötigen die herkömmlichen Verfahren ein hohen Zeit- und Arbeitsaufwand durch die absätzige Arbeitsweise.

Der Erfindung liegt die Aufgabe zugrunde, in einem Arbeitsgang einen Damm zu formen und die sich auf der Bodenoberfläche oder in der oberen Bodenschicht befindlichen organische Pflanzenmasse und Dünger zur Düngung der auszusäenden Pflanzen zu nutzen.

Diese Aufgabe wird durch das erfindungsgemäße Verfahren gemäß des Anspruches 1 gelöst. Infolge dieser Maßnahmen wird die sich auf der Bodenoberfläche oder in der oberen Bodenschicht befindliche organische Masse und Dünger zu einem Düngerband zusammengezogen und in eine Ebene unterhalb des abzulegenden Saatgutes in einen Damm eingebracht. In diesen Damm, in dessen unteren Bereich sich die zusammengezogene organische Masse und Dünger befindet, wird das Saatgut in einem Arbeitsgang somit in einem rückverfestigten Erddamm abgelegt.

Dieses Verfahren lässt sich insbesondere beim Ausbringen von Mais und Kartoffeln anwenden.

Bei der Anwendung dieses erfindungsgemäßen Verfahrens lässt sich beim Anpflanzen von Kartoffeln dadurch verwirklichen, dass zunächst eine Furche in den Boden gezogen wird, dass in diese Furche die von der ersten Reihe von Häufelkörpern zusammengezogene obere Bodenschicht mit auf der Bodenoberfläche und/oder in der Bodenschicht befindlichen Pflanzen, Pflanzenresten und/oder aufgebrachten organischen und/oder mineralischen Düngemitteln gebracht wird.

Bei Kartoffeln wird also zunächst eine Furche in den Boden gezogen, in welcher die organische Masse und der Dünger eingebracht werden. Oberhalb dieser Schare wird dann Boden angehäuft, in welche die Kartoffel abgelegt werden. Die Kartoffeln werden dann mit Erde bedeckt und es erfolgt dann eine rückverfestigende Dammnachformung des Saatdammes mit Dammformelementen.

Bei der Ausbringung von Mais werden zunächst die organischen und evtl. mineralischen Rückstände zusammengezogen. Oberhalb dieser zusammengezogenen organischen Masse und evtl mineralischen Dünger wird ein Erddamm in rückverfestigender Weise angehäuft und geformt, wobei dann in diesen geformten und rückverfestigten Saat der Mais mittels geeigneter Vorrichtungen abgelegt wird.

Die Ablage von Saatgut in Saatdämmen lässt sich mit einem Gerät zur Herstellung von Saatdämmen in Reihen auszuliegendes körniges Saatgut entsprechend des Patentanspruches 4 verwirklichen. Infolge dieser Maßnahmen wird zunächst mittels der Häufelkörper die sich auf der Bodenoberfläche und in der oberen Bodenschicht befindliche organische Masse und evtl. Dünger zur Bildung eines Düngerbandes zusammengezogen. Oberhalb dieses Düngerbandes wird mit weiteren Häufelkörpern Boden zur Bildung eines Saatdammes angehäuft und über Dammformelemente geformt und rückverfestigt. In diese rückverfestigten und geformten Saatdämme werden dann mittels Sävorrichtungen die Maiskörner abgelegt.

In manchen Fällen kann es sinnvoll sein, dass vor der ersten Reihe von Häufelkörpern jeweils Tiefenlockerer, vorzugsweise mit vorlaufenden Scheibenelementen angeordnet sind. Diese Ausgestaltung bietet sich vor allem bei der Direktsaat an, wenn sich sehr viele Pflanzenreste noch auf der Bodenoberfläche befinden.

Hierdurch wird bei der Aussaat von Getreide der Durchwurzelungshorizont aufbereitet, die organische Substanz gebündelt unter die Saatgutebene gebracht, der Damm geformt und rückverfestigt. Dieses Verfahren kann mit einer weiteren Dünung und Einbringung der Saat direkt kombiniert werden. Hierbei wird bei nur einer Überfahrt in bodenschonender Weise ein den Bedürfnissen anpassbares Gerät eingesetzt. Die Auflockerung des Bodens erfolgt mit Tiefenlockerern mit unterschiedlichen Werkzeugen und jeweils vorgeschaltetem Scheibensech, je nach Einsatzerfordernis. Danach legen paarisch angeordnete, vorzugsweise als Hohlscheibenseche oder andere Scharformen, die vorhandene organische Substanz gebündelt zusammen. Die nachfolgende zweite Einheit von vorzugsweise als Hohlscheibensechen oder anderen Scharformen ausgebildeten Häufelkörpern formt den Erddamm über die gebündelte organische Substanz zum eigentlichen Damm auf. Der noch lose Erddamm wird von einer Dammformrolle oder anderen Dammformelementen entsprechend geformt und rückverfestigt. Auf dem fertigen Damm erfolgt dann die Saat mittels geeigneter Saateinbringungselemente.

Die Häufelkörper zum Zusammenziehen der organischen Masse und evtl. des Düngers, sowie zum Zusammenziehen der Erde zum Saatdamm können als schräg zur Fahrtrichtung und zur vertikalen angestellte Scheibenelemente oder als Häufelschare ausgebildet sein.

In einer Ausführungsform ist vorgesehen, dass die Häufelkörper der ersten Reihe als schräg zur Fahrtrichtung und zur Vertikalen angestellte Scheibenelemente ausgebildet sind, und dass die Häufelkörper der zweiten Reihe als Häufelschare ausgebildet sind.

In einfacher Weise können zum Formen und Rückverfestigen des Dammes die Dammformelemente als wellenförmige Formkörper ausgebildet sein. Auch ist es möglich die Dammformelemente zum Rückverfestigen des Erdreiches des Saatdammes und zur Formung des Saatdammes als Dammformrollen auszubilden.

Vorteilhaft hat sich zur Einbringung des saatgutes, insbesondere beim Ausbringen von Maiskörnern herausgestellt, dass die Dammformelemente zwischen den Häufelkörpern der zweiten Reihe und der Saatgutablageeinrichtung angeordnet sind.

Ein einfaches Einbringen der Saatkörner in dem Saatdamm lässt sich dadurch erreichen, dass die Saatgutablageeinrichtung jeweils als Säaggregat mit Säfurchen schaffenden Säscharen und Saatgutvereinzelungseinrichtung ausgebildet sind.

Weitere Einzelheiten der Erfindung sind der Beispielsbeschreibung und den Zeichnungen zu entnehmen. Hierbei zeigen
- Fig. 1: eine Seitenansicht der Vorrichtung im Schnitt und in Prinzipdarstellung,
- Fig. 2: eine Ansicht der Vorrichtung von oben,
- Fig. 3: eine weitere Vorrichtung in Seitenansicht, im Schnitt und in Prinzipdarstellung,
- Fig. 4: die Vorrichtung nach Fig. 3 in der Ansicht von oben,
- Fig. 5: eine weitere Vorrichtung im Schnitt, in Seitenansicht und in Prinzipdarstellung und
- Fig. 6: die Vorrichtung nach Fig. 5 in der Draufsicht.

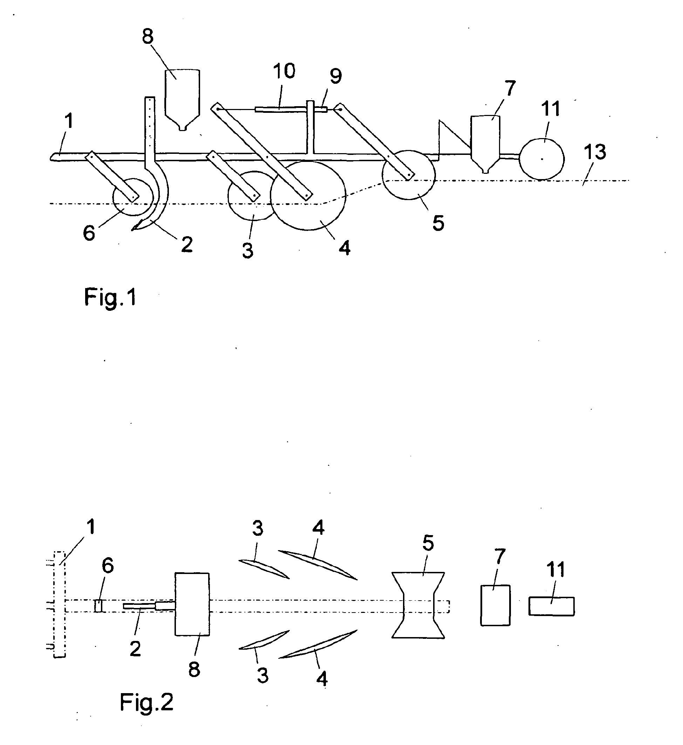

Das Gerät nach dem Ausführungsbeispiel gemäß den Fig. 1 und 2 zur Herstellung von Saatdämmen besteht im Wesentlichen aus dem Rahmengestell 1, dem Scheibensech 2, dem verstellbaren Tiefenlockerer 2 und den Arbeitswerkzeugen 12, die sich zusammensetzen aus den schwenkbar angebauten Hohlscheibensechen 3 zur Bündelung der organischen Massen, den Hohlscheibensechen 4 zur Häufelung des Bodens, der Dammformrolle 5 und der anbaubaren Säeinrichtung 7 mit der Druckrolle 11 und dem Düngerkasten 8. Zur Einstellung der Hohlscheibenseche 4 und der Dammformrolle 5 dienen die einstellbaren und gefederten Verstellmöglichkeiten 9 und 10.

Das federnd gelagerte Scheibensech 6 durchschneidet auf dem Boden liegende organische Masse, um ein Verstopfen des nachfolgenden Tiefenlockerers 2 zu vermeiden. Über einen angebauten und angetriebenen Düngerkasten werden hinter dem Tiefenlockerer 2 Dünger eingestreut. Der Tiefenlockerer 2 lockert je Saatreihe den Boden tief auf und erschafft, je nach Arbeitswerkzeug, so einen gut durchwurzelbaren Horizont. Die dabei mit Druck belasteten und federnd gelagerten Hohlscheibenseche 3 arbeiten die vorhandene organische Masse und den gestreuten Dünger als kompaktes Band zusammen.

Die nachfolgenden einstellbaren Hauptscheibenseche 4 werfen den Boden zum Erddamm auf. Der Erddamm wird dann in einer trapezähnlichen Form von der Dammformrolle 5 rückverfestigt. Auf dem fertigen Damm erfolgt die Einsaat mit aufgebauten, in der Regel herkömmlichen Säaggregaten 7. Für das gleichzeitige Anlegen mehrerer Saatreihen kann das Rahmengestell 1 derart erweitert werden, das es mehrere Gerätekombinationen nebeneinander trägt.

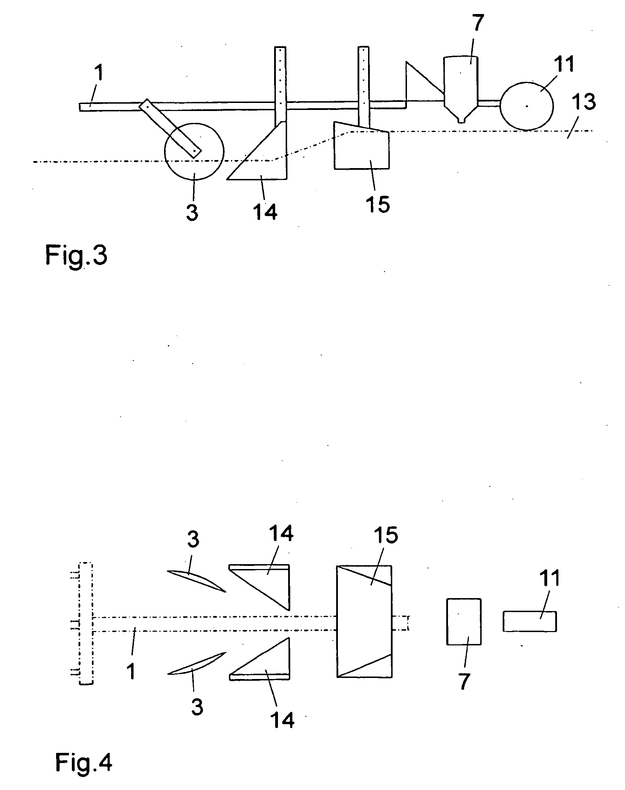

Die Vorrichtung nach den Fig. 3 und 4 unterscheidet sich nach der Vorrichtung nach den Fig. 1 und 2 dadurch, dass von den Häufelkörper kein Scheibensech und kein Tiefenlockerer von den Häufelkörpern angeordnet sind und die andere Ausgestaltung der Häufelkörper und Dammformelementen.

Die Vorrichtung gemäß den Fig. 3 und 4 zur Herstellung von Saatdämmen besteht aus dem Rahmengestell 1 und den Arbeitswerkzeugen, die sich zusammensetzen aus den schwenkbar angebauten Hohlscheibensechen 3 zur Bündelung der organischen Masse, den als Häufelkörpern ausgebildeten Häufelscharen 14 zur Häufelung des Bodens oberhalb des von der organischen Masse gebildeten Düngerbandes, den Dammformelementen 15, die als wellenförmige Plattenelemente ausgestaltet sind, der Säeinrichtung 7 mit der Druckrolle 11. Zur Einstellung der Hohlscheibenseche und der Dammformelemente dienen einstellbare und/oder gefederte Verstellmöglichkeiten.

Die Funktionsweise des Gerätes gemäß den Fig. 3 und 4 ist folgende:

Zunächst werden über die Scheibenseche 3 die sich auf der Bodenoberfläche oder in der oberen Bodenschicht befindliche organische Masse zu einem Düngerband in Reihen, die beabstandet zueinander sind, zusammengezogen. Mittels der nachfolgenden als Häufelschare 14 ausgebildeten Häufelelemente, die tiefer in den Boden als die Häufelelemente 3 der ersten Reihe eingreifen, wird weiterer Boden zu dessen Ablage oberhalb des zusammengezogenen Düngerband zu einem Saatdamm zusammengezogen.

Mittels der nachfolgenden, aus Plattenelementen bestehenden wellenförmigen Dammformelementen 15 wird der zusammengezogene Boden verfestigt und zu Saatdämmen geformt.

Hinter den Dammformelementen 15 sind die Saatgutablageeinrichtungen 7, die nicht dargestellte Säschare aufweisen und eine Säfurche im Boden ziehen, in die das Saatgut in dem Boden des geschaffenen Saatdammes in der oberen Bodenschicht oberhalb des Düngerbandes abgelegen, angeordnet. Durch die nachfolgende Saatandruckrolle 11 wird das Saatgut und der oberhalb des Saatgutes sich befindliche Boden angedrückt.

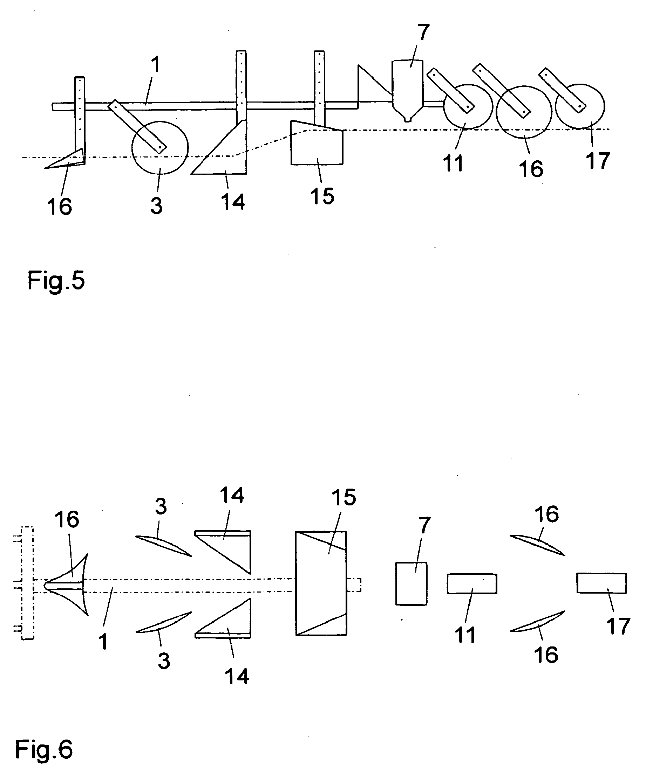

Die Vorrichtung gemäß den Fig. 5 und 6 weist das Rahmengestell 1 auf. An diesem Rahmengestell 1 ist ein eine Furche schaffendes Scharelement 16 angeordnet, welches eine Furche in den Boden zieht. Hinter diesem Furchenschar 16 ist eine erste Reihe von Häufelkörpern 3 angeordnet. Diese Häufelkörper 3 ziehen die obere Bodenschicht mit auf der Bodenoberfläche oder in der oberen Bodenschicht sich befindlichen Pflanzen, Pflanzenresten oder aufgebrachten organischen oder mineralischen Düngern zusammen und schieben diesen Boden in die von dem Schar 16 gezogene Furche. Hinter den als Hohlscheibenscharen 3 ausgebildeten Häufelkörpern der ersten Reihe sind weitere Häufelkörper 14 angeordnet, die tiefer in den Boden als die Häufelkörper 3 der ersten Reihe eingreifen. Diese Häufelkörper 14 ziehen weiteren Boden zu dessen Ablage oberhalb des zusammengezogenen und das Düngerband bildenden Bodenschicht zur Bildung eines Saatdammes zusammen. Hinter den Häufelkörpern 14 sind aus Platten ausgebildete wellenförmige Dammformelemente 15 angeordnet, welche einen Saatdamm formen und verfestigen. Hinter diesen Dammformelementen 15 sind Saatgutablageeinrichtungen 7 angeordnet, die das Saatgut in den Boden einbringen. Hierbei sind nicht dargestellte Scharelemente vorgesehen, die eine ausreichend tiefe Furche in den Boden ziehen, um so beispielsweise auch Saatkartoffeln als Saatgut in dem Saatdamm ablegen zu können. Hinter dieser Sä- und Pflanzeinrichtung 7 sind zunächst Saatandruckelemente 11 angeordnet. Hinter diesen sind ebenfalls Häufelkörper 16 angeordnet, um die Saatfurche zu schließen. Hinter diesen die Saatfurche schließenden Häufelkörpern 16 ist eine Andruckrolle 17 angeordnet.

## Patentansprüche

1. Verfahren zur Herstellung von Saatdämmen und Ablage des Saatgutes in den Saatdämmen, bestehend aus zumindest folgenden Schritten:
- mittels erster Häufelkörper (3) wird die obere Bodenschicht mit auf der Bodenoberfläche und/oder in der Bodenschicht befindlichen Pflanzen, Pflanzenresten und/oder aufgebrachten organischen und/oder mineralischen Düngemitteln zur Bildung eines Düngerbandes in Reihen zusammengezogen,
- mittels nachfolgender Häufelkörper (4,14), die tiefer in den Boden als die Häufelelemente (3) der ersten Reihe eingreifen, wird weiterer Boden zu dessen Ablage oberhalb des ersten zusammengezogenen und das Düngerband bildende Bodenschicht zur Bildung eines Saatdammes zusammengezogen,
- mittels nachfolgender Dammformelemente (5,15) wird der zusammengezogene Boden zur Saatdämmen geformt,
- mittels hinter den Dammformelementen (5,15) angeordneten Saatgutablageeinrichtungen (7) wird Saatgut in den Boden des geschaffenen Saatdammes in der oberen Bodenschicht oberhalb des Düngerbandes abgelegt.

2. Verfahren nach Anspruch 1, **dadurch gekennzeichnet, dass** zunächst eine Furche mittels Furchenelementen (16) in den Boden gezogen wird, dass in diese Furche die von der ersten Reihe von Häufelkörpern (3) zusammengezogene obere Bodenschicht mit auf der Bodenoberfläche und/oder in der Bodenschicht befindlichen Pflanzen, Pflanzenresten und/oder aufgebrachten organischen und/oder mineralischen Düngemitteln verbracht wird.

3. Verfahren nach Anspruch 1 oder 2, **dadurch gekennzeichnet, dass** nach dem Einbringen des Saatguts mittels Mitteln (16) eine Bedeckung des Saatguts mit Bodenteilen erfolgt und/oder Nachformung des Saatdammes mittels Dammformelementen (17) erfolgt.

4. Gerät zur Herstellung von Saatdämmen für in Reihen auszulegendes körniges Saatgut, bestehend aus zumindest folgenden in Fahrtrichtung hintereinander angeordneten Arbeitswerkzeugen:
- in einer Reihe sind Häufelkörper (3) zum Zusammenziehen der oberen Bodenschicht mit auf der Bodenoberfläche und/oder in der Bodenschicht befindlichen Pflanzen, Pflanzenresten und/oder aufgebrachten organischen und/oder mineralischen Düngemittels zur Bildung eines Düngerbandes angeordnet,
- in der folgenden Reihe sind weitere Häufelkörper (4,14), die tiefer in den Boden als die Häufelkörper (3) der ersten Reihe eingreifen, zum zusammenziehen weiteren Bodens und dessen Ablage oberhalb der ersten zusammengezogenen und ein Düngerband bildenden Bodenschicht zur Bildung eines Dammes angeordnet,
- in der weiter folgenden Reihe sind Dammformelemente (5,15) zur Formung von Saatdämmen angeordnet,
- hinter den Dammformelementen (5,15) sind Saatgutablageeinrichtungen (7) zur Ablage körnigen Saatgutes in den Boden des geschaffenen Säatdammes oberhalb des Düngerbandes angeordnet.

5. Gerät nach Anspruch 4, **dadurch gekennzeichnet, dass** vor der ersten Reihe von Häufelkörpern (3) jeweils Tiefenlockerer (2) mit vorlaufendem Scheibenelement (6) angeordnet sind.

6. Gerät nach Anspruch 4, **dadurch gekennzeichnet, dass** die Häufelkörper als schräg zur Fahrtrichtung und zur Vertikalen angestellte Scheibenelemente (3) ausgebildet sind.

7. Gerät nach Anspruch 4, **dadurch gekennzeichnet, dass** die Häufelkörper als Häufelschare (14) ausgebildet sind.

8. Gerät nach Anspruch 4, **dadurch gekennzeichnet, dass** die Häufelkörper (3) der ersten Reihe als schräg zur Fahrtrichtung und Vertikalen angestellte Scheibenelemente ausgebildet sind, dass die Häufelkörper (14) der zweiten Reihe als Häufelschare ausgebildet sind.

9. Gerät nach Anspruch 4, **dadurch gekennzeichnet, dass** die Dammformelemente (15) als wellenförmige Formkörper ausgebildet sind.

10. Gerät nach Anspruch 4, **dadurch gekennzeichnet, dass** die Dammformelemente (5) als Dammformrollen ausgebildet sind.

11. Gerät nach einem oder mehreren der vorstehenden Ansprüche, **dadurch gekennzeichnet, dass** die Dammformelemente (5,15) zwischen den Häufelkörpern (4,14) der zweiten Reihe und den Saatgutablageeinrichtungen (7) angeordnet sind.

12. Gerät nach einem oder mehreren der vorstehenden Ansprüche, **dadurch gekennzeichnet, dass** die Saatgutablageeinrichtungen (7) jeweils als Säaggregat mit Säfurchen schaffenden Säscharen und Saatgutvereinzelungseinrichtungen ausgebildet sind.

## Claims

1. Method for producing seed ridges and depositing the seed material in the seed ridges, said method comprising at least the following steps:
- by means of a first ridging body (3) the top layer of the soil, having plants, plant remains that are situated on the surface of the soil and/or in the soil layer and/or having applied organic and/or mineral fertilizers, is drawn together in rows to form a fertilizer strip,
- by means of subsequent ridging bodies (4, 14), which engage deeper into the soil than the ridging elements (3) of the first row, more soil is drawn together to be deposited above the first layer of soil, drawn together and forming the fertilizer strip, to form a seed ridge,
- by means of subsequent ridge forming elements (5, 15) the soil drawn together is shaped to form seed ridges,
- by means of seed material depositing devices (7) that are located behind the ridge forming elements (5, 15) seed material is deposited into the soil of the created seed ridge in the top layer of the soil above the fertilizer strip.

2. Method according to Claim 1, **characterized in that** first of all a furrow is drawn into the soil by means of furrowing elements (16), **in that** the top layer of soil, drawn together by the first row of ridging bodies (3) and having plants, plant remains that are located on the surface of the soil and/or in the soil layer and/or having applied organic and/or mineral fertilizers, is moved into said furrow.

3. Method according to Claim 1 or 2, **characterized in that** once the seed material has been introduced, the seed material is covered with soil parts by means of means (16) and/or the seed ridge is contoured by means of ridge forming elements (17).

4. Device for producing seed ridges for granular seed material to be deposited in rows, said device comprising at least the following working tools located one behind the other in the direction of travel:
- ridging bodies (3) are located in one row for drawing together the top layer of soil, having plants, plant remains that are situated on the surface of the soil and/or in the soil layer and/or having applied organic and/or mineral fertilizers, for forming a fertilizer strip,
- further ridging bodies (4, 14) are located in the next row, said ridging bodies engaging deeper into the soil than the ridging bodies (3) of the first row, for drawing together more soil and depositing it above the first layer of soil, drawn together and forming a fertilizer strip, to form a ridge,
- ridge forming elements (5, 15) are located in the next row for forming seed ridges,
- behind the ridge forming elements (5, 15) are located seed material depositing devices (7) for depositing granular seed material into the soil of the created soil ridge above the fertilizer strip.

5. Device according to Claim 4, **characterized in that** subsoilers (2) with leading disc element (6) are located in each case in front of the first row of ridging bodies (3).

6. Device according to Claim 4, **characterized in that** the ridging bodies are realized as disc elements (3) set inclinedly relative to the direction of travel and to the vertical.

7. Device according to Claim 4, **characterized in that** the ridging bodies are realized as ridging coulters (14).

8. Device according to Claim 4, **characterized in that** the ridging bodies (3) of the first row are realized as disc elements set inclinedly relative to the direction of travel and to the vertical, **in that** the ridging bodies (14) of the second row are realized as ridging coulters.

9. Device according to the Claim 4, **characterized in that** the ridge forming elements (15) are realized as undulating moulded bodies.

10. Device according to Claim 4, **characterized in that** the ridge shaping elements (5) are realized as ridge shaping rollers.

11. Device according to one or more of the preceding claims, **characterized in that** the ridge shaping elements (5, 15) are located between the ridging bodies (4, 14) of the second row and the seed material depositing devices (7).

12. Device according to one or more of the preceding claims, **characterized in that** the seed material depositing devices (7) are realized in each case as a seed drill with sowing coulters that create sowing ridges and with seed material separating devices.

## Revendications

1. Procédé pour la réalisation de buttes à semences et dépôt de semences dans les buttes, procédé comprenant les étapes suivantes :
- à l'aide d'au moins un organe ramasseur (3) on repousse la couche de terre supérieure avec les plantes, les restes de plantes et/ou les engrais organiques et/ou minéraux qui se trouvent sur la couche de terre, pour former une bande d'engrais en ligne,
- à l'aide des organes buteurs suivants (4, 14) qui pénètrent plus profondément dans le sol que les organes buteurs (3) de la première rangée, on repousse plus de terre pour la déposer au-dessus de la première couche de terre buttée et formant la bande d'engrais pour constituer une butte à semences,
- à l'aide d'éléments formeurs de buttes (5, 15), suivants, on donne à la terre ainsi regroupée, une forme de butte à semences,
- à l'aide d'installations de dépose de semences (7) en aval des éléments formeurs de buttes (5, 15), on dépose des semences dans la terre de la butte à semences ainsi réalisée, dans la couche de terre supérieure au-dessus de la bande d'engrais.

2. Procédé selon la revendication 1,
**caractérisé en ce qu'**
on trace d'abord un sillon à l'aide d'éléments traçant en sillon (16) dans le sol, et
dans ce sillon, on ramène la couche de terre supérieure, ramassée par la première rangée d'organes buteurs (3) avec les plantes, les restes de plantes et/ou les engrais organiques et/ou minéraux qui se trouvent dans la couche de terre.

3. Procédé selon la revendication 1 ou 2,
**caractérisé en ce qu'**
après introduction des semences à l'aide des éléments traçant un sillon (16), on recouvre les semences avec de la terre et/ou on reforme la butte à semences à l'aide d'éléments formeurs de buttes (17).

4. Appareil pour réaliser des buttes à semences pour des semences en forme de grains à répartir en rangée, appareil ayant au moins les outils suivants installés les uns derrière les autres dans la direction de déplacement :
- dans une rangée, des organes buteurs (3) pour regrouper la couche supérieure de terre avec les plantes, les restes de plantes et/ou les engrais organiques et/ou minéraux qui se trouvent à la surface du sol pour former une bande d'engrais,
- dans la rangée suivante, d'autres organes buteurs (4, 14) qui pénètrent plus profondément dans le sol que les organes buteurs (3) de la première rangée, pour ramasser d'autres parties de terre et les déposer au-dessus de la première couche de terre, ramassée et formant une bande d'engrais pour constituer une butte,
- dans la rangée suivante, des éléments formeurs de buttes (5, 15) pour former des buttes de semences,
- derrière les éléments formeurs de buttes (5, 15), des installations de dépose de semences (7) pour déposer des semences en forme de graines dans le sol de la butte à semences ainsi réalisée, au-dessus de la bande d'engrais.

5. Appareil selon la revendication 4,
**caractérisé en ce que**
devant la première rangée d'organes buteurs (3), des organes ameublisseurs en profondeur (2) sont précédés par des éléments en forme de disques (6).

6. Appareil selon la revendication 4,
**caractérisé en ce que**
les organes buteurs sont constitués par des éléments en forme de disques (3) verticaux, disposés de manière inclinée par rapport à la direction de déplacement.

7. Appareil selon la revendication 4,
**caractérisé en ce que**
les organes buteurs sont réalisés sous la forme de socs ramasseurs (14).

8. Appareil selon la revendication 4,
**caractérisé en ce que**
les organes buteurs (3) de la première rangée, sont des éléments en forme de disques disposés verticalement et en biais par rapport à la direction de déplacement et les organes buteurs (14) de la seconde rangée, sont réalisés sous la forme de socs buteurs.

9. Appareil selon la revendication 4,
**caractérisé en ce que**
les éléments formeurs de buttes (15) sont réalisés par des organes de forme ondulée.

10. Appareil selon la revendication 4,
**caractérisé en ce que**
les éléments formeurs de buttes (5) sont des rouleaux formeurs de buttes.

11. Appareil selon l'une des revendications précédentes,
**caractérisé en ce que**
les éléments formeurs de buttes (5, 15) sont disposés entre les organes buteurs (4, 14) de la seconde rangée et les installations de dépose de semences (7).

12. Appareil selon l'une des revendications précédentes,
**caractérisé en ce que**
les installations de dépose de semences (7) sont réalisées chacune sous la forme d'une unité d'ensemencement avec des socs traçant des sillons à semences et des installations de séparation des semences.
